# EUROPÄISCHE PATENTSCHRIFT

(11) **EP 4 018 278 B1**
(45) Veröffentlichungstag und Bekanntmachung des Hinweises auf die Patenterteilung: **03.01.2024**
(21) Anmeldenummer: 20745154.3
(22) Anmeldetag: 22.07.2020
(51) Int. Cl.: G05D 1/02

(54) **VERFAHREN ZUR ANPASSUNG EINER GESCHWINDIGKEIT EINES AUTONOMEN FAHRZEUGS**
METHOD FOR ADJUSTING A SPEED OF AN AUTONOMOUS VEHICLE
PROCÉDÉ PERMETTANT DE RÉGLER LA VITESSE D'UN VÉHICULE AUTONOME

(30) Priorität: 20.08.2019 DE 102019212399
(43) Veröffentlichungstag der Anmeldung: 29.06.2022
(73) Patentinhaber: ZF Friedrichshafen AG, 88046 Friedrichshafen (DE)
(72) Erfinder: TAPPEINER, Michael, 88048 Friedrichshafen (DE)
(86) Internationale Anmeldenummer: PCT/EP2020/070621
(87) Internationale Veröffentlichungsnummer: WO 2021/032393

(56) Entgegenhaltungen:
- DE-A1-102015 203 155
- US-A1- 2015 370 255
- US-A1- 2016 349 749

## Beschreibung

Die vorliegende Erfindung betrifft ein Verfahren zur Anpassung einer Geschwindigkeit eines autonomen Fahrzeugs mit den Merkmalen nach Anspruch 1, eine Steuereinrichtung mit den Merkmalen nach Anspruch 5, ein Computerprogrammprodukt mit den Merkmalen nach Anspruch 7 und ein Fahrzeug mit den Merkmalen nach Anspruch 8.

Für autonome Fahrzeuge im industriellen Umfeld gibt es unterschiedliche Betriebsbereiche, in welchen diese betrieben werden können. So gibt es Bereiche, in denen nur autonome Fahrzeuge fahren und keine Personen anwesend sind. In anderen Bereichen gibt es einen gemischten Betrieb zwischen autonomen und vom Menschen betriebenen Fahrzeugen. In einem dritten Bereich können sich neben den autonomen und nicht autonomen Fahrzeugen noch Personen bewegen.

Aktuelle autonome Transportfahrzeuge (typischerweise auch als fahrerlose Transportfahrzeuge, kurz AGV bezeichnet) sind für einen dieser Betriebsbereiche konzipiert. So gibt es in Container-Terminals AGVs, die über ein zentrales System gesteuert werden und in einem abgeschlossenen Bereich fahren, in welchem keine Personen anwesend sind. Diese Fahrzeuge haben typischerweise keine Systeme, die eine Kollision mit einer Person sicher vermeiden würde. Andere AGVs sind für einen Betrieb im Umfeld mit Personen ausgelegt. Diese fahren mit sehr niedrigen Geschwindigkeiten von z. B. 5 km/h und verfügen über ein sicheres Personenerkennungssystem.

In Abhängigkeit von der zur Verfügung stehenden Sensortechnologie und dem damit verbundenen Detektionsvermögen ergeben sich Einschränkungen in der Reichweite der AGVs und somit an die fahrbare Geschwindigkeit. Werden Personen z. B. nur auf einer geringen Distanz vom 5 m sicher erkannt, muss die Geschwindigkeit so reduziert werden, dass das Fahrzeug ab Erkennung einer Person bis zum Stillstand die 5 m nicht überfährt. Diese Einschränkungen in der Geschwindigkeit, die sich vorwiegend aus dem Bereich des Personenschutzes ergeben, macht den Einsatz autonomer Fahrzeuge vor allem bei größeren Distanzen ineffizient.

Aus DE 10 2015 203 155 A1 ist ein System, das einen Computer in einem Fahrzeug umfasst, bekannt, wobei der Computer dafür ausgelegt ist, das Fahrzeug in einem autonomen und/oder einem halbautonomen Modus zu betreiben. Dieser ist zum Detektieren mindestens einer Bedingung einer Straße, auf der das Fahrzeug fährt, und Bestimmen mindestens einer autonomen Aktion auf der Basis der Bedingung ausgelegt.

Aus der US 2016/349749 A1 ist ein Verfahren zur Anpassung einer Geschwindigkeit eines autonomen Fahrzeugs in Abhängigkeit von einem Betriebsbereich des autonomen Fahrzeugs bekannt, wobei das autonome Fahrzeug in mehreren Betriebsbereichen betreibbar ist. Dabei können beispielsweise verschiedene Geschwindigkeitsbegrenzungen für die Betriebsbereiche vorgesehen sein.

Ferner ist aus der US 2015/370255 A1 ein Verfahren zur Anpassung einer Geschwindigkeit eines autonomen Fahrzeugs in Abhängigkeit von einem Betriebsbereich des autonomen Fahrzeugs bekannt, wobei das autonome Fahrzeug in mehreren Betriebsbereichen betreibbar ist. Dabei können autonome Fahrzeuge in verschiedenen Betriebsbereichen gemäß jeweils zugeordneten Bereichsregeln betrieben werden, wobei die Bereichsregeln beispielsweise bestimmte Geschwindigkeitsvorgaben umfassen können.

Der vorliegenden Erfindung liegt ausgehend vom Stand der Technik die Aufgabe zu Grunde, eine verbesserte Methode vorzuschlagen, mittels welcher die Effizienz autonomer Fahrzeuge im industriellen Umfeld erhöht werden kann.

Die vorliegende Erfindung schlägt ausgehend von der vorgenannten Aufgabe ein Verfahren zur Anpassung einer Geschwindigkeit eines autonomen Fahrzeugs nach Anspruch 1, eine Steuereinrichtung nach Anspruch 5, ein Computerprogrammprodukt nach Anspruch 7 und ein Fahrzeug nach Anspruch 8 vor. Weitere vorteilhafte Ausgestaltungen und Weiterbildungen gehen aus den Unteransprüchen hervor.

Bei einem Verfahren zur Anpassung einer Geschwindigkeit eines autonomen Fahrzeugs in Abhängigkeit von einem Betriebsbereich des autonomen Fahrzeugs, wobei das autonome Fahrzeug in wenigstens zwei aneinander angrenzenden Betriebsbereichen betreibbar ist, ist für jeden Betriebsbereich ein Geschwindigkeitsprofil für das autonome Fahrzeug festgelegt. Ein Wechsel zwischen zwei Betriebsbereichen wird erkannt. Ausgehend von dem erkannten Betriebsbereich wird ein passendes Geschwindigkeitsprofil aus den Geschwindigkeitsprofilen gewählt. Ein Antriebssystem des autonomen Fahrzeugs wird mittels einer Steuereinrichtung des autonomen Fahrzeugs derart angesteuert, dass dieses Antriebsenergie bereitstellt, damit die Geschwindigkeit des autonomen Fahrzeugs angepasst wird und das autonome Fahrzeug sich gemäß dem gewählten Geschwindigkeitsprofil bewegt.

Das autonome Fahrzeug kann vorzugsweise ein AGV oder ein NKW sein, z. B. ein Transportfahrzeug, ein Flurförderfahrzeug, ein LKW, oder auch ein PKW sein. Das autonome Fahrzeug ist derart ausgeformt sein, dass dieses befähigt ist, Fahrfunktionen und Arbeitsfunktionen ab Autonomielevel 4 oder höher auszuführen. Das Autonomielevel bezieht sich hierbei auf die SAE J3016 Klassifizierung. In der folgenden Beschreibung wird das autonome Fahrzeug auch als Fahrzeug bezeichnet.

Das Fahrzeug weist ein Antriebssystem auf, welches dazu ausgeformt ist, Antriebsenergie bereitzustellen, mit welcher das Fahrzeug angetrieben werden kann. Das Antriebssystem kann dabei eine Energiequelle aufweisen, welche z. B. als Elektromotor oder als Verbrennungsmotor oder als eine andere geeignete Energiequelle ausgeformt sein kann. Das Antriebssystem kann ein Getriebe aufweisen, welches dazu geeignet ist, das von der Energiequelle bereitgestellte Drehmoment zu übersetzen.

Das Fahrzeug weist weiterhin eine Steuereinrichtung auf, die mit dem Antriebssystem des Fahrzeugs verbunden ist. Diese Verbindung ist derart, dass ein Daten- und Signalaustausch erfolgen kann. Die Verbindung kann drahtlos oder kabelgebunden ausgebildet sein. Die Steuereinrichtung ist dazu eingerichtet, das Antriebssystem des Fahrzeugs anzusteuern. Des Weiteren kann die Steuereinrichtung dazu eingerichtet sein, das Fahrzeug zu befähigen autonome Fahrfunktionen ab Level 4 durchzuführen. Die Steuereinrichtung kann z. B. als ECU oder Domain-ECU ausgebildet sein. Die Steuereinrichtung weist außerdem eine Kommunikationseinheit auf, mittels welcher diese mit externen Systemen kommunizieren kann, beispielsweise mit einer zentralen Leitstelle, mit einer Cloud, oder mit weiteren Fahrzeugen oder einer Infrastruktur per C2X-Kommunikation. Zudem kann die Steuereinrichtung eine Speichereinrichtung aufweisen.

Zudem weist das Fahrzeug wenigstens einen Umfeld-Sensor auf. Dieser ist dazu eingerichtet, eine Umgebung des Fahrzeugs zu erfassen. Der wenigstens eine Umfeld-Sensor kann beispielsweise als ein Radar-Sensor, ein Lidar-Sensor, eine Kamera oder als eine Kombination aus diesen Sensoren oder andere geeignete Umfeld-Sensoren ausgeformt sein. Der wenigstens eine Umfeld-Sensor ist mit der Steuereinrichtung verbunden. Diese Verbindung ist derart, dass ein Daten- und Signalaustausch erfolgen kann. Die Verbindung kann drahtlos oder kabelgebunden ausgebildet sein. Selbstverständlich kann das Fahrzeug mehr als einen Umfeld-Sensor aufweisen. Beispielsweise kann das Fahrzeug einen ersten Umfeld-Sensor aufweisen, welcher ein fahrzeugnahes Umfeld erfassen kann, und einen zweiten Umfeld-Sensor, welcher ein fahrzeugfernes Umfeld erfassen kann. Der erste Umfeld-Sensor kann beispielsweise ein Lidar-Sensor sein, der zweite Umfeld-Sensor kann beispielsweise ein Radar-Sensor sein.

Das autonome Fahrzeug ist in wenigstens zwei aneinander angrenzenden Betriebsbereichen betreibbar. Das heißt, dass das Fahrzeug sicher autonom in wenigstens zwei Betriebsbereichen betrieben werden kann, ohne sein Umfeld, z. B. Personen oder weitere Fahrzeuge, zu gefährden. Ein Betriebsbereich ist dabei definiert als ein abgegrenzter Bereich im industriellen Umfeld. Als industrielles Umfeld kann beispielsweise ein Betriebshof, ein Lager- und Logistikbereich, ein Hafengelände, ein Flughafenvorfeld, ein Baustellenbereich, ein Tagebaubereich, o. ä. gelten.

Jeder Betriebsbereich ist derart ausgeformt, dass dieser sich aufgrund seiner Verkehrsbedingungen von weiteren Betriebsbereich unterscheiden lässt. Beispielsweise sind in einem ersten Betriebsbereich die Verkehrsbedingungen derart, dass sich dort ausschließlich autonome Fahrzeuge aufhalten und bewegen dürfen. Beispielsweise sind in einem zweiten Betriebsbereich die Verkehrsbedingungen derart, dass sich dort sowohl autonome Fahrzeuge als auch nicht autonome Fahrzeuge mit einem Fahrzeugführer aufhalten und bewegen dürfen. In diesem zweiten Betriebsbereich dürfen sich keine Personen oder Tiere aufhalten, die sich nicht in einem Fahrzeug befinden. Beispielsweise sind in einem dritten Betriebsbereich die Verkehrsbedingungen derart, dass sich dort sowohl autonome Fahrzeuge als auch nicht autonome Fahrzeuge mit einem Fahrzeugführer sowie Personen aufhalten und bewegen dürfen. Dieser dritte Betriebsbereich stellt somit einen klassischen Mischverkehr dar.

Die wenigstens zwei Betriebsbereiche grenzen z. B. derart aneinander an, dass zwischen diesen kein Übergang vorhanden ist. Beide Bereiche grenzen dann unmittelbar aneinander an. Alternativ dazu können die beiden Betriebsbereiche mittelbar aneinander angrenzen. In diesem Fall ist zwischen den beiden Betriebsbereichen ein Übergang vorhanden. Dieser Übergang kann beispielsweise als freie Fläche ausgebildet sein, auf welcher es nicht gestattet ist, dass Fahrzeuge oder Personen sich dort längere Zeit aufhalten. Der Übergang kann allerdings von dem autonomen Fahrzeug überfahren werden.

Für jeden Betriebsbereich ist ein Geschwindigkeitsprofil für das autonome Fahrzeug festgelegt. Diese Geschwindigkeitsprofile sind beispielsweise in der Speichereinrichtung der Steuereinrichtung hinterlegt. Alternativ oder zusätzlich dazu können die Geschwindigkeitsprofile auch bei einer zentralen Leitstelle oder in einer Cloud hinterlegt sein und an Steuereinrichtung des autonomen Fahrzeugs kommuniziert werden. Jedes Geschwindigkeitsprofil unterscheidet sich von den jeweils anderen Geschwindigkeitsprofilen.

Beispielsweise kann für den ersten Betriebsbereich ein Geschwindigkeitsprofil festgelegt sein, in welchem das autonome Fahrzeug eine Maximalgeschwindigkeit von 20 km/h, 30 km/h, 40 km/h, 50 km/h, 60 km/h, 70 km/h, 80 km/h, 90 km/h oder 100 km/h aufweisen darf. Die Maximalgeschwindigkeit, die in dem ersten Betriebsbereich zulässig ist, ist dabei vorzugweise höher als in den übrigen Betriebsbereichen. Für den zweiten Betriebsbereich kann ein Geschwindigkeitsprofil festgelegt sein, in welchem das autonome Fahrzeug eine Maximalgeschwindigkeit aufweist, die ebenso groß oder vorzugsweise geringer ist wie in dem ersten Betriebsbereich. Beispielsweise kann die Maximalgeschwindigkeit in dem zweiten Betriebsbereich in einem Bereich von 10 km/h bis 100 km/h liegen. Für den dritten Betriebsbereich kann ein Geschwindigkeitsprofil festgelegt sein, in welchem das autonome Fahrzeug eine Maximalgeschwindigkeit aufweist, die geringer ist als in dem ersten und in dem zweiten Betriebsbereich. Beispielsweise kann die Maximalgeschwindigkeit in dem dritten Betriebsbereich bei 5 km/h liegen.

Die Wahl der Maximalgeschwindigkeit hängt dabei nicht nur von den Verkehrsbedingungen des jeweiligen Betriebsbereichs ab, sondern auch von einem Leistungsvermögen des wenigstens einen Umfeld-Sensors. Dabei ist zu beachten, auf welche Distanz der wenigstens eine Umfeld-Sensor ein Hindernis, eine Person und/oder ein weiteres Fahrzeug sicher erkennen kann. Dies ist nötig, da sich daraus ein Bremsweg bestimmt, welcher durch das autonome Fahrzeug einzuhalten ist, um einen Unfall zu vermeiden.

Ein Wechsel zwischen zwei Betriebsbereichen wird erkannt. Dies kann beispielsweise erfolgen, indem festgestellt wird, in welchem Betriebsbereich sich das autonome Fahrzeug aufhält, oder ob das autonome Fahrzeug eine Begrenzung eines Betriebsbereichs überfährt.

Das Erkennen des Betriebsbereichs bzw. des Wechsels des Betriebsbereichs kann beispielsweise mittels eines Positionsbestimmungs-Systems erfolgen, welches das autonome Fahrzeug aufweist. Dieses ist dazu eingerichtet, eine Position des Fahrzeugs zu ermitteln. Das Positionsbestimmungs-System ist mit der Steuereinrichtung verbunden. Diese Verbindung ist derart, dass ein Daten- und Signalaustausch erfolgen kann. Die Verbindung kann drahtlos oder kabelgebunden ausgebildet sein. Das Positionsbestimmungs-System kann die Position des autonomen Fahrzeugs beispielsweise mittels eines GNSS-Systems ermitteln. Zusätzlich oder alternativ dazu kann das Positionsbestimmungs-System die Position des autonomen Fahrzeugs mittels eines Leitsystems ermitteln, welches z. B. in einen Untergrund eingelassen ist, auf welchem sich das autonome Fahrzeug bewegt. Ein derartiges Leitsystem kann z. B. als Metalldraht, als Kabel, als Magneten, als RFID-Tags ausgebildet sein. Das Positionsbestimmungs-System ist in diesem Fall derart ausgebildet, dass dieses das entsprechende Leitsystem erkennt.

Der Wechsel zwischen zwei Betriebsbereichen wird mittels einer Bereichszuweisung durch einen externen Leitstand erkannt. Der externe Leitstand verfolgt das autonome Fahrzeug virtuell und stellt somit regelmäßig dessen Position fest. Dieses Verfolgen kann beispielsweise mittels einer Funkverbindung erfolgen, die durch einen Funkstandard dargestellt wird. Wenn das autonome Fahrzeug im Begriff ist, sich von einem Betriebsbereich in einen anderen Betriebsbereich zu bewegen, wird dies von dem externen Leitstand festgestellt. Dieser signalisiert dem autonomen Fahrzeug daraufhin, dass ein Bereichswechsel erfolgt. Dieses Signal kann mittels der Kommunikationseinheit der Steuereinrichtung empfangen werden.

Ausgehend von dem erkannten Betriebsbereich wird ein passendes Geschwindigkeitsprofil aus den Geschwindigkeitsprofilen gewählt. Das heißt, dass dasjenige Geschwindigkeitsprofil gewählt wird, das für den jeweiligen Betriebsbereich festgelegt ist. Diese Auswahl erfolgt mittels der Steuereinrichtung auf Grundlage des erkannten Betriebsbereichs.

Das Antriebssystem des autonomen Fahrzeugs wird mittels der Steuereinrichtung derart angesteuert, dass dieses Antriebsenergie bereitstellt, damit die Geschwindigkeit des autonomen Fahrzeugs angepasst wird und das autonome Fahrzeug sich gemäß dem gewählten Geschwindigkeitsprofil bewegt. Das heißt, dass die Steuereinrichtung die Maximalgeschwindigkeit, die das autonome Fahrzeug im jeweiligen Betriebsbereich, in welchen es sich hineinbewegt und anschließend bewegt, aufweisen darf, anpasst. Die Steuereinrichtung fordert somit von dem Antriebssystem nur diejenige Antriebsenergie ein, die benötigt wird, um das Geschwindigkeitsprofil für den entsprechenden Betriebsbereich zu erfüllen. In anderen Worten begrenzt die Steuereinrichtung die Antriebsenergie, die von dem Antriebssystem bereitgestellt wird, für diejenigen Betriebsbereiche, in welchen sich nicht nur autonome Fahrzeuge aufhalten.

Vorteilhaft daran ist, dass das autonome Fahrzeug in verschiedenen Betriebsbereichen sicher betrieben werden kann. Vor allem im Mischverkehr kann die Sicherheit von Personen und nicht autonomen Fahrzeugen gewährleistet werden. Dadurch ist es möglich, ein industrielles Umfeld mit verschiedenen Betriebsbereichen mit demselben autonomen Fahrzeug zu bedienen. Zudem ist es möglich auch größere Distanzen effizient autonom zurückzulegen.

Nach einer weiterbildenden Ausführungsform werden die Betriebsbereiche mittels des Positionsbestimmungs-Systems erkannt. Dies wurde bereits in der vorherigen Beschreibung beschrieben.

Erfindungsgemäß werden die Betriebsbereiche mittels einer Bereichszuweisung durch einen externen Leitstand erkannt. Dies wurde bereits in der vorherigen Beschreibung beschrieben.

Nach einer weiterbildenden Ausführungsform wird bei erkanntem Wechsel zwischen zwei Betriebsbereichen zusätzlich mittels der Steuereinrichtung der wenigstens eine Umfeld-Sensor des autonomen Fahrzeugs angesteuert, so dass dieser seinen Betriebszustand ändert. Ein erster Betriebszustand des Umfeld-Sensors ist hierbei als aktivierter Betriebszustand definiert. In diesem ersten Betriebszustand nimmt der wenigstens eine Umfeld-Sensor das Umfeld des autonomen Fahrzeugs auf und generiert Umfeld-Daten. Ein zweiter Betriebszustand des Umfeld-Sensors ist hierbei als deaktivierter Betriebszustand definiert. In diesem zweiten Betriebszustand nimmt der wenigstens eine Umfeld-Sensor das Umfeld des autonomen Fahrzeugs nicht auf und generiert keine Umfeld-Daten.

In anderen Worten kann der wenigstens eine Umfeld-Sensor an- oder ausgeschaltet werden, wenn sich das autonome Fahrzeug von einem Betriebsbereich in einen anderen Betriebsbereich bewegt. Beispielsweise kann der wenigstens eine Umfeld-Sensor in dem ersten Betriebsbereich aktiviert sein und in dem zweiten Betriebsbereich deaktiviert sein. Weist das autonome Fahrzeug mehr als einen Umfeld-Sensor auf, kann beispielsweise ein erster Umfeld-Sensor in dem ersten Betriebsbereich aktiviert, und in dem zweiten und dritten Betriebsbereich deaktiviert sein. Ein zweiter Umfeld-Sensor kann beispielsweise in dem ersten und zweiten Betriebsbereich deaktiviert und in dem dritten Betriebsbereich aktiviert sein. Ein dritter Umfeld-Sensor kann beispielsweise in dem ersten und dritten Betriebsbereich deaktiviert und in dem zweiten Betriebsbereich aktiviert sein. Selbstverständlich kann einer dieser Umfeld-Sensoren auch in mehreren Betriebsbereichen aktiviert sein.

Vorteilhaft daran ist, dass der wenigstens eine Umfeld-Sensor nicht ununterbrochen aktiviert sein muss. Dadurch kann in Betriebsbereichen, in welchen dieser nicht benötigt wird, Energie gespart werden.

Die Steuereinrichtung für das autonomes Fahrzeug ist mit dem Antriebssystem des autonomen Fahrzeugs verbindbar. Verbindbar bedeutet, dass die Steuereinrichtung mit dem Antriebssystem verbunden ist, wenn die Steuereinrichtung in einem Fahrzeug verwendet wird. Dabei ist das Antriebssystem mittels der Steuereinrichtung ansteuerbar, was bereits beschrieben wurde. Die Steuereinrichtung kann also das Antriebssystem des Fahrzeugs ansteuern, wenn die Steuereinrichtung in dem Fahrzeug verwendet wird. Die Steuereinrichtung weist Mittel auf, um ein Verfahren durchzuführen, das bereits in der vorherigen Beschreibung beschrieben wurde. Diese Mittel können beispielsweise ein Computerprogrammprodukt umfassen. Die Steuereinrichtung kann zusätzlich mit weiteren Systemen verbindbar sein, z. B. mit dem Positionsbestimmungs-System.

Nach einer weiterbildenden Ausführungsform ist die Steuereinrichtung zusätzlich mit wenigstens einem Umfeld-Sensor des autonomen Fahrzeugs verbindbar, wobei der wenigstens eine Umfeld-Sensor mittels der Steuereinrichtung ansteuerbar ist. Die Steuereinrichtung weist zusätzlich Mittel auf, um das Verfahren durchzuführen, welches bereits in der vorherigen Beschreibung beschrieben wurde. Diese Mittel können von demselben Computerprogrammprodukt umfasst werden.

Das Computerprogrammprodukt umfasst Befehle, die bei einer Ausführung des Programms durch die bereits beschriebene Steuereinrichtung, das Verfahren ausführen, das in der vorherigen Beschreibung beschrieben wurde. Das Computerprogrammprodukt kann auf einem Datenträger, beispielsweise auf einer CD, DVD, einem USB-Stick o. ä., oder als herunterladbarer Datenstrom verkörpert sein.

Das Fahrzeug weist das Antriebssystem und die Steuereinrichtung auf, wie bereits beschrieben. Die Steuereinrichtung ist mit dem Antriebssystem verbunden, wie ebenfalls bereits beschrieben. Zudem kann die Steuereinrichtung mit dem wenigstens einen Umfeld-Sensor und dem Positionsbestimmungs-System verbunden sein, wie bereits beschrieben. Das Fahrzeug kann z. B. dazu befähigt sein, autonome Fahrfunktionen ab Level 4 auszuführen.

Anhand der im Folgenden erläuterten Figur wird ein Ausführungsbeispiel und Details der Erfindung näher beschrieben. Es zeigen:
- Fig. 1: eine schematische Darstellung eines Fahrzeugs in einem industriellen Umfeld nach einem Ausführungsbeispiel,
- Fig. 2: eine schematische Darstellung eines Verfahrens für das Fahrzeug aus dem Ausführungsbeispiel in Fig. 1.

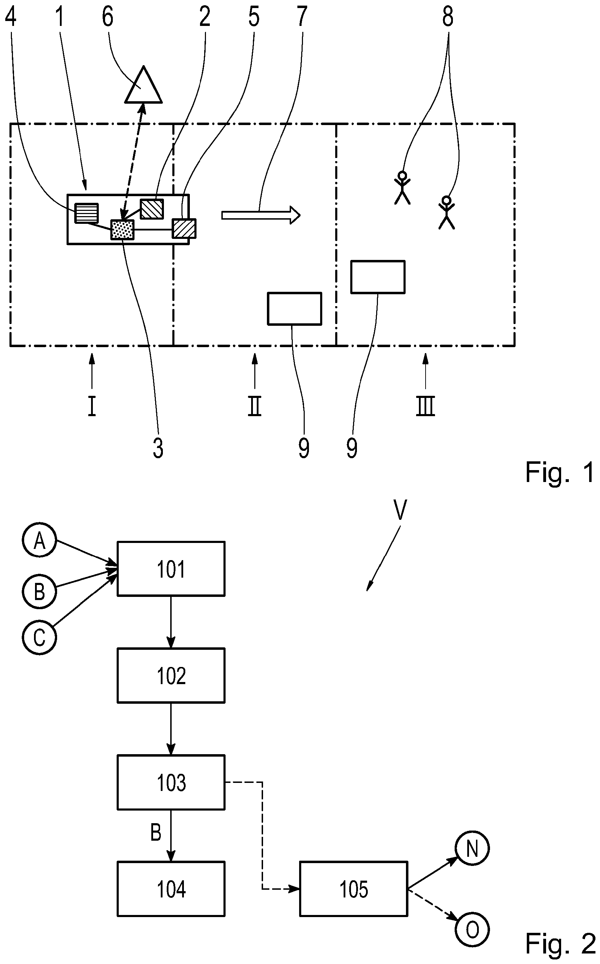

Fig. 1 zeigt eine schematische Darstellung eines Fahrzeugs 1 in einem industriellen Umfeld nach einem Ausführungsbeispiel. Das Fahrzeug 1 ist als ein AGV ausgeformt und bewegt sich in Fahrtrichtung 7 z. B. auf einem Hafengelände, welches das industrielle Umfeld darstellt. Das Hafengelände weist drei Betriebsbereiche I, II, III auf. Diese Betriebsbereiche I, II, III sind derart ausgeformt, dass diese von ihren Verkehrsbedingungen unterschiedlich sind. In dem ersten Betriebsbereich I dürfen sich nur autonome Fahrzeuge, beispielsweise das dargestellte Fahrzeug 1, bewegen. In dem zweiten Betriebsbereich II dürfen sich neben autonomen Fahrzeugen auch weitere Fahrzeuge 9 bewegen, welche auch nicht autonom ausgeformt sein können. In dem dritten Betriebsbereich III dürfen sich autonome Fahrzeuge, wie das dargestellte Fahrzeug 1, weitere Fahrzeuge 9, die nicht autonom ausgeformt sein können, und Personen 8 bewegen. Der zweite Betriebsbereich II grenzt dabei sowohl an den ersten Betriebsbereich I als auch an den dritten Betriebsbereich III an. Das autonome Fahrzeug 1 befindet sich zu einem Großteil noch im ersten Betriebsbereich I, ist aber im Begriff in den zweiten Betriebsbereich II zu wechseln.

Das autonome Fahrzeug 1 weist eine Steuereinrichtung 3 auf. Diese befähigt das Fahrzeug 1 dazu, autonome Fahrfunktionen ab Level 4 durchzuführen. Die Steuereinrichtung 3 weist eine Speichereinrichtung auf, welche hier nicht eingezeichnet ist. Die Steuereinrichtung 3 weist zudem eine Kommunikationseinheit auf, die hier nicht dargestellt ist. Mittels dieser Kommunikationseinheit kann die Steuereinrichtung mit einem externen Leitstand 6 mittels C2X-Kommunikation kommunizieren und sich dabei eines Funkstandards bedienen. Das heißt, dass die Steuereinrichtung 3 sowohl Daten- und Signale senden als auch empfangen kann. Dies ist durch den strichlierten Pfeil angedeutet. Mittels der Kommunikationseinheit kann die Steuereinrichtung 3 zusätzlich mit den weiteren Fahrzeugen 9 und ggf. mit den Personen 8 und einer Infrastruktur kommunizieren. Der externe Leitstand 6 kann das autonome Fahrzeug 1 während des Fahrbetriebs desselben überwachen und dadurch feststellen, in welchem der Betriebsbereiche I, II, III sich das Fahrzeug 1 aufhält.

Das Fahrzeug 1 weist weiterhin ein Antriebssystem 2 auf, welches dazu ausgeformt ist, Antriebsenergie bereitzustellen. Die Steuereinrichtung 3 ist mit dem Antriebssystem 2 verbunden und kann dieses ansteuern. Zwischen der Steuereinrichtung 3 und dem Antriebssystem 2 kann daher bei Bedarf ein Daten- und Signalaustausch erfolgen.

Weiterhin weist das Fahrzeug 1 mehrere Umfeld-Sensoren 5 auf, die zur besseren Übersicht als ein Block dargestellt sind. Ein Umfeld-Sensor 5 ist dazu eingerichtet, einen Nahbereich an einer Fahrzeugfront zu überwachen. Ein weiterer Umfeld-Sensor 5 ist dazu eingerichtet, einen Fernbereich in Fahrtrichtung 7 vor dem Fahrzeug 1 zu überwachen. Ein nochmals weiterer Umfeld-Sensor 5 ist dazu eingerichtet, einen Nahbereich an einem Fahrzeugheck zu überwachen. Wiederum weitere Umfeld-Sensoren 5 sind dazu eingerichtet, einen Nahbereich an den Fahrzeugseiten zu überwachen. Selbstverständlich kann das Fahrzeug 1 noch weitere Umfeld-Sensoren 5 aufweisen. Jeder dieser Umfeld-Sensoren 5 ist mit der Steuereinrichtung 3 verbunden, so dass ein Daten- und Signalaustausch erfolgen kann. Die Steuereinrichtung 3 ist zudem dazu eingerichtet, die jeweiligen Umfeld-Sensoren 5 anzusteuern.

Außerdem weist das Fahrzeug 1 ein Positionsbestimmungs-System 4 auf. Dieses dient dazu, eine Position des Fahrzeugs 1 auf dem Hafengelände festzustellen und somit zu bestimmen, in welchem der Betriebsbereiche I, II, III sich das autonome Fahrzeug 1 aufhält. Das Positionsbestimmungs-System 4 ist hier derart ausgeformt, dass dieses eine globale Position des Fahrzeugs 1 mittels eines GNSS-Systems ermitteln kann. Alternativ dazu kann das Positionsbestimmungs-System 4 ist derart ausgeformt sein, dass dieses eine lokale Position des Fahrzeugs 1 mittels eines Leitsystems ermitteln kann, welches in einen Untergrund eingelassen ist, auf welchem sich das autonome Fahrzeug 1 bewegt. Ein derartiges Leitsystem kann z. B. als Metalldraht, als Kabel, als Magneten, als RFID-Tags o. ä. ausgebildet sein. Das Positionsbestimmungs-System 4 ist mit der Steuereinrichtung 3 verbunden, so dass ein Daten- und Signalaustausch erfolgen kann.

Für jeden der Betriebsbereiche I, II, III ist ein zulässiges Geschwindigkeitsprofil A, B, C festgelegt. Diese Geschwindigkeitsprofile A, B, C können beispielsweise in der Speichereinrichtung der Steuereinrichtung 3 hinterlegt sein. Das Festlegen kann beispielsweise werksseitig erfolgen oder bei einer ersten Inbetriebnahme des Fahrzeugs 1 durchgeführt werden.

Für den ersten Betriebsbereich I ist das erste Geschwindigkeitsprofil A derart festgelegt, dass das autonome Fahrzeug 1 eine Maximalgeschwindigkeit von z. B. 50 km/h aufweisen darf. Für den zweiten Betriebsbereich II ist das zweite Geschwindigkeitsprofil B derart festgelegt, dass das autonome Fahrzeug 1 eine geringere Maximalgeschwindigkeit als im ersten Betriebsbereich I aufweisen darf, z. B. 30 km/h. Für den dritten Betriebsbereich III ist das dritte Geschwindigkeitsprofil C derart festgelegt, dass das autonome Fahrzeug 1 eine viel geringere Maximalgeschwindigkeit als im ersten Betriebsbereich I und eine geringere Maximalgeschwindigkeit als im zweiten Betriebsbereich II aufweisen darf, z. B. 5 km/h. Dieses dritte Geschwindigkeitsprofil C rührt daher, dass der Bremsweg des autonomen Fahrzeugs 1 in jedem Fall ausreichend sein muss, um Unfälle mit Personen 8 zu vermeiden.

Fig. 2 zeigt eine schematische Darstellung eines Verfahrens V für das Fahrzeug 1 aus dem Ausführungsbeispiel in Fig. 1. In einem ersten Schritt 101 werden die Geschwindigkeitsprofil A, B, C festgelegt, wobei jedes Geschwindigkeitsprofil A, B, C für genau einen der Betriebsbereiche I, II, III festgelegt ist. Dabei ist das erste Geschwindigkeitsprofil A für den ersten Betriebsbereich I, das zweite erste Geschwindigkeitsprofil B für den zweiten Betriebsbereich II und das dritte Geschwindigkeitsprofil C für den dritten Betriebsbereich III festgelegt.

In einem zweiten Schritt 102 wird ein Wechsel zwischen zwei aneinander angrenzenden Betriebsbereichen I, II, III erkannt. Hier wird erkannt, dass das autonome Fahrzeug 1 sich von dem ersten Betriebsbereich I in den zweiten Betriebsbereich II bewegt. Das Fahrzeug 1 wechselt somit von dem ersten Betriebsbereich I in den zweiten Betriebsbereich II. Dies erfolgt mittels des Positionsbestimmungs-Systems 4.

In einem dritten Schritt 103 wird ausgehend von dem erkannten Betriebsbereich I, II, III ein passendes Geschwindigkeitsprofil A, B, C gewählt wird. Daher wird hier für das autonome Fahrzeug 1 das zweite Geschwindigkeitsprofil B für den zweiten Betriebsbereich II gewählt.

In einem vierten Schritt 104 wird anschließend das Antriebssystem 2 des Fahrzeugs 1 von der Steuereinrichtung 3 derart angesteuert, dass die bereitgestellte Antriebsenergie und dadurch die Geschwindigkeit des Fahrzeugs 1 angepasst wird auf das entsprechende Geschwindigkeitsprofil A, B, C, hier also auf das zweite Geschwindigkeitsprofil B. Dadurch wird die Maximalgeschwindigkeit, die das autonome Fahrzeug 1 in dem zweiten Betriebsbereich II fahren darf reduziert gegenüber der Maximalgeschwindigkeit im ersten Betriebsbereich. Das autonome Fahrzeug 1 bewegt sich somit im zweiten Betriebsbereich II gemäß dem gewählten Geschwindigkeitsprofil B.

In einem optionalen fünften Schritt 105, der an den dritten Schritt 103 anschließen kann, kann ausgehend von dem erkannten Betriebsbereich I, II, III ein Betriebszustand O, N wenigstens eines Umfeld-Sensors 5 geändert werden. In einem ersten Betriebszustand O nimmt der wenigstens eine Umfeld-Sensor 5 das Umfeld des autonomen Fahrzeugs 1 auf und generiert Umfeld-Daten. Der wenigstens eine Umfeld-Sensor 5 ist also aktiviert. In einem zweiten Betriebszustand N nimmt der wenigstens eine Umfeld-Sensor 5 das Umfeld des autonomen Fahrzeugs 1 nicht auf und generiert keine Umfeld-Daten. Der wenigstens eine Umfeld-Sensor 5 ist also deaktiviert.

Hier wird derjenige der Umfeld-Sensoren 5 deaktiviert, der in Fahrtrichtung 7 des Fahrzeugs 1 einen Fernbereich überwacht. Der Betriebszustand N, O dieses Umfeld-Sensors 5 ändert sich daher auf den zweiten Betriebszustand N. Aus diesem Grund ist der Pfeil zum ersten Betriebszustand O strichliert dargestellt. Durch das Deaktivieren dieses Umfeld-Sensors 5 kann Energie gespart werden.

Die hier gezeigten Beispiele sind nur beispielhaft gewählt. Beispielsweise können weitere Umfeld-Sensoren beim Wechsel der Betriebsbereiche aktiviert werden, beispielsweise diejenigen Umfeld-Sensoren, der einen Nahbereich um das Fahrzeug überwachen.

### Bezugszeichen

- 1: Fahrzeug
- 2: Antriebssystem
- 3: Steuereinrichtung
- 4: Positionsbestimmungs-System
- 5: Umfeld-Sensor
- 6: externer Leitstand
- 7: Fahrtrichtung
- 8: Personen
- 9: weitere Fahrzeuge

- I: erster Betriebsbereich
- II: zweiter Betriebsbereich
- III: dritter Betriebsbereich

- A: erstes Geschwindigkeitsprofil
- B: zweites Geschwindigkeitsprofil
- C: drittes Geschwindigkeitsprofil

- N: zweiter Betriebszustand
- O: erster Betriebszustand

- V: Verfahren

- 101: erster Schritt
- 102: zweiter Schritt
- 103: dritter Schritt
- 104: vierter Schritt
- 105: fünfter Schritt

## Patentansprüche

1. Verfahren (V) zur Anpassung einer Geschwindigkeit eines autonomen Fahrzeugs (1) in Abhängigkeit von einem Betriebsbereich (I, II, III) des autonomen Fahrzeugs (1), wobei das autonome Fahrzeug (1) in wenigstens zwei aneinander angrenzenden Betriebsbereichen (I, II, III) betreibbar ist, wobei
- für jeden Betriebsbereich (I, II, III) ein Geschwindigkeitsprofil (A, B, C) für das autonome Fahrzeug (1) festgelegt ist,
- ein Wechsel zwischen zwei Betriebsbereichen (I, II, III) erkannt wird,
- ausgehend von dem erkannten Betriebsbereich (I, II, III) mittels einer Steuereinrichtung (3) des autonomen Fahrzeugs (1) ein passendes Geschwindigkeitsprofil (A, B, C) aus den Geschwindigkeitsprofilen (A, B, C) gewählt wird,
- ein Antriebssystem (2) des autonomen Fahrzeugs (1) mittels der Steuereinrichtung (3) des autonomen Fahrzeugs (1) derart angesteuert wird, dass dieses Antriebsenergie bereitstellt, damit die Geschwindigkeit des autonomen Fahrzeugs (1) angepasst wird und das autonome Fahrzeug (1) sich gemäß dem gewählten Geschwindigkeitsprofil (A, B, C) bewegt, **dadurch gekennzeichnet, dass**
die Betriebsbereiche (I, II, III) mittels einer Bereichszuweisung durch einen externen Leitstand (6) erkannt werden.

2. Verfahren (V) nach Anspruch 1, wobei die Betriebsbereiche (I, II, III) mittels eines Positionsbestimmungs-Systems (4) erkannt werden.

3. Verfahren (V) nach einem der vorherigen Ansprüche, wobei bei erkanntem Wechsel zwischen zwei Betriebsbereichen (I, II, III) zusätzlich mittels der Steuereinrichtung (3) wenigstens ein Umfeld-Sensor (5) des autonomen Fahrzeugs (1) angesteuert wird, so dass dieser seinen Betriebszustand (N, O) ändert.

4. Steuereinrichtung (3) für ein autonomes Fahrzeug (1), wobei die Steuereinrichtung (3) mit einem Antriebssystem (2) des autonomen Fahrzeugs (1) verbindbar ist, wobei das Antriebssystem (2) mittels der Steuereinrichtung (3) ansteuerbar ist, und wobei die Steuereinrichtung (3) Mittel aufweist, um ein Verfahren (V) nach einem der Ansprüche 1 bis 2 durchzuführen.

5. Steuereinrichtung (3) nach Anspruch 4, wobei die Steuereinrichtung (3) zusätzlich mit wenigstens einem Umfeld-Sensor (5) des autonomen Fahrzeugs (1) verbindbar ist, wobei der wenigstens eine Umfeld-Sensor (5) mittels der Steuereinrichtung (3) ansteuerbar ist, und wobei die Steuereinrichtung (3) zusätzlich Mittel aufweist, um das Verfahren (V) nach Anspruch 4 durchzuführen.

6. Computerprogrammprodukt, umfassend Befehle, die bei einer Ausführung des Programms durch eine Steuereinrichtung (3) nach Anspruch 4 oder 5, das Verfahren (V) nach einem der Ansprüche 1 bis 3 ausführen.

7. Autonomes Fahrzeug (1) aufweisend ein Antriebssystem (2) und eine Steuereinrichtung (3) nach Anspruch 4 oder 5, wobei die Steuereinrichtung (3) mit dem Antriebssystem (2) verbunden ist.

## Claims

1. Method (V) for adjusting a speed of an autonomous vehicle (1) depending on an operating region (I, II, III) of the autonomous vehicle (1), wherein the autonomous vehicle (1) can be operated in at least two adjacent operating regions (I, II, III), wherein
- a speed profile (A, B, C) for the autonomous vehicle (1) is defined for each operating region (I, II, III),
- a change between two operating regions (I, II, III) is detected,
- starting from the detected operating region (I, II, III), a suitable speed profile (A, B, C) is selected from the speed profiles (A, B, C) by means of a control device (3) of the autonomous vehicle (1),
- a drive system (2) of the autonomous vehicle (1) is controlled by means of the control device (3) of the autonomous vehicle (1) in such a way that the latter provides drive energy in order that the speed of the autonomous vehicle (1) is adjusted and the autonomous vehicle (1) moves in accordance with the selected speed profile (A, B, C), **characterized in that**
the operating regions (I, II, III) are detected by means of a region allocation by an external control centre (6).

2. Method (V) according to Claim 1, wherein the operating regions (I, II, III) are detected by means of a position determination system (4).

3. Method (V) according to one of the preceding claims, wherein when a change between two operating regions (I, II, III) is detected, at least one environment sensor (5) of the autonomous vehicle (1) is additionally controlled by means of the control device (3), so that the sensor changes its operating state (N, 0).

4. Control device (3) for an autonomous vehicle (1), wherein the control device (3) can be connected to a drive system (2) of the autonomous vehicle (1), wherein the drive system (2) can be controlled by means of the control device (3), and wherein the control device (3) has means for carrying out a method (V) according to one of Claims 1 to 2.

5. Control device (3) according to Claim 4, wherein the control device (3) can additionally be connected to at least one environment sensor (5) of the autonomous vehicle (1), wherein the at least one environment sensor (5) can be controlled by means of the control device (3), and wherein the control device (3) additionally has means for carrying out the method (V) according to Claim 4.

6. Computer program product, comprising commands which, when the program is executed by a control device (3) according to Claim 4 or 5, carry out the method (V) according to one of Claims 1 to 3.

7. Autonomous vehicle (1) having a drive system (2) and a control device (3) according to Claim 4 or 5, wherein the control device (3) is connected to the drive system (2).

## Revendications

1. Procédé (V) permettant d'adapter une vitesse d'un véhicule autonome (1) en fonction d'une zone de fonctionnement (I, II, III) du véhicule autonome (1), dans lequel le véhicule autonome (1) peut fonctionner dans au moins deux zones de fonctionnement (I, II, III) adjacentes, dans lequel
- pour chaque zone de fonctionnement (I, II, III), un profil de vitesse (A, B, C) est défini pour le véhicule autonome (1),
- un changement entre deux zones de fonctionnement (I, II, III) est détecté,
- en partant de la zone de fonctionnement (I, II, III) détectée, un profil de vitesse (A, B, C) adapté est sélectionné parmi les profils de vitesse (A, B, C) au moyen d'un dispositif de commande (3) du véhicule autonome (1),
- un système d'entraînement (2) du véhicule autonome (1) est piloté au moyen du dispositif de commande (3) du véhicule autonome (1) de telle sorte que celui-ci fournit de l'énergie d'entraînement pour adapter la vitesse du véhicule autonome (1) et pour que le véhicule autonome (1) se déplace selon le profil de vitesse (A, B, C) sélectionné,
**caractérisé en ce que** les zones de fonctionnement (I, II, III) sont détectées au moyen d'une attribution de zone par un centre de contrôle externe (6).

2. Procédé (V) selon la revendication 1, dans lequel les zones de fonctionnement (I, II, III) sont détectées au moyen d'un système de localisation (4).

3. Procédé (V) selon l'une quelconque des revendications précédentes, dans lequel, lorsqu'un changement entre deux zones de fonctionnement (I, II, III) est détecté, en plus au moyen du dispositif de commande (3) au moins un capteur d'environnement (5) du véhicule autonome (1) est piloté de façon à changer d'état de fonctionnement (N, 0).

4. Dispositif de commande (3) pour un véhicule autonome (1), dans lequel le dispositif de commande (3) peut être relié à un système d'entraînement (2) du véhicule autonome (1), dans lequel le système d'entraînement (2) peut être piloté au moyen du dispositif de commande (3), et dans lequel le dispositif de commande (3) présente des moyens pour exécuter un procédé (V) selon l'une quelconque des revendications 1 à 2.

5. Dispositif de commande (3) selon la revendication 4, dans lequel le dispositif de commande (3) peut de plus être relié à au moins un capteur d'environnement (5) du véhicule autonome (1), dans lequel ledit au moins un capteur d'environnement (5) peut être piloté au moyen du dispositif de commande (3), et dans lequel le dispositif de commande (3) présente en outre des moyens pour exécuter le procédé (V) selon la revendication 4.

6. Produit de programme informatique, comprenant des instructions qui, lorsque le programme est exécuté par un dispositif de commande (3) selon la revendication 4 ou 5, exécutent le procédé (V) selon l'une quelconque des revendications 1 à 3.

7. Véhicule autonome (1), présentant un système d'entraînement (2) et un dispositif de commande (3) selon la revendication 4 ou 5, dans lequel le dispositif de commande (3) est relié au système d'entraînement (2).
